# EUROPEAN PATENT SPECIFICATION

(11) **EP 1 613 710 B1**
(45) Date of publication and mention of the grant of the patent: **06.09.2006**
(21) Application number: 04726076.5
(22) Date of filing: 07.04.2004
(51) Int. Cl.: C09K 11/77

(54) **EUROPIUM-DOPED GALLIUM-INDIUM OXIDES AS RED EMITTING ELECTROLUMINESCENT PHOSPHOR MATERIALS**
EUROPIUM-DOTIERTE GALLIUM-INDIUM OXIDE ALS ROT-EMITTIERENDE, ELEKTROLUMINESZENTE PHOSPHORMATERIALIEN
OXYDES DE GALLIUM-INDIUM DOPES A L'EUROPIUM UTILISES COMME MATERIAUX PHOSPHORES ELECTROLUMINESCENTS ROUGES

(30) Priority: 07.04.2003 US 460395 P
(43) Date of publication of application: 11.01.2006
(73) Proprietor: NANOLUMENS ACQUISITION, INC., Norcross, GA 30092 (US)
(72) Inventor: KITAI, Adrian, Mississauga, Ontario L5J 1T6 (CA); JIANG, Zhimei, Oshawa, Ontario L1G 5H1 (CA); COOK, Ken, Waterloo, Ontario N2J 3M1 (CA)
(74) Representative: Van Malderen, Joëlle
(86) International application number: PCT/CA2004/000527
(87) International publication number: WO 2004/090068

(56) References cited:
- EP-A- 1 378 555
- FR-A- 2 316 314

## Description

### TECHNICAL FIELD

This invention relates to new phosphor materials exhibiting electroluminescence based on metal oxides and methods for their production. More particularly, the invention relates to new europium-doped gallium-indium oxide phosphors and use thereof as electroluminescent materials.

### BACKGROUND ART

Electroluminescence (EL) occurs by the emission of light from a phosphor in response to a sufficiently high electric field developed across the phosphor. Phosphor refers to those materials that emit light in response to the application of a field across the material. Thin film electroluminescent devices have a basic structure comprising a phosphor film or layer sandwiched between two electrodes.

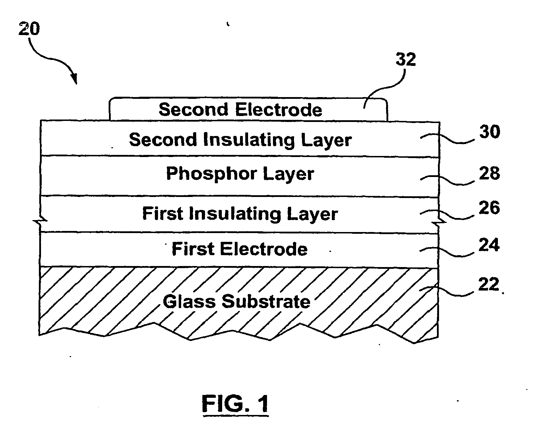

A typical EL device 20 (shown in Fig. 1) consists of a glass substrate 22, a first electrode 24 consisting of a transparent conducting electrode such as indium tin oxide (ITO) deposited onto the glass substrate, and then a first insulating dielectric layer 26 deposited onto the ITO. The phosphor layer 28 is then deposited onto the first insulating dielectric layer 26 and then a second insulating dielectric layer 30 is deposited onto the phosphor layer, followed by a second electrode 32 of metal such as aluminum deposited onto the second insulating dielectric layer 30.

Application of an effective voltage across the two electrodes 24, 32 produces the electric field strength required to induce electroluminescence in the phosphor 28. The role of the dielectric layers 26, 30 is to avoid dielectric breakdown of the phosphor, and to form a suitable interface on either side of the phosphor layer. In some cases, including the results presented in this invention, one of the dielectric layers may be eliminated and EL emission still results.

There is strong commercial interest in achieving a wide spectral range in electroluminescent phosphors for visible display application and in particular for making color flat panel displays. Sulphide phosphor ZnS:Mn is a well known efficient light emitter in electroluminescence as discussed in T. Inoguchi, M. Takeda, Y. Kakihara, Y. Nakata, M. Yoshida, SID'74 Digest, p. 84-85, 1974. A significant drawback to this phosphor is that it is moisture sensitive and is prone to reacting with oxygen especially when electrically driven. Known electroluminescent materials being studied include materials such as SrS:RE, see W.A. Barrow, R.E. Coovert, C.N. King, Digest 1984 SID International Symposium, Los Angeles, p. 249, SrGa₂S₄:RE and CaGa₂S₄:RE as disclosed in W.A. Barrow, R.C. Coovert, E. Dickey, C.N. King, C. Laakso, S.S. Sun, R.T. Tuenge, R. Wentross, Digest 1993 SID International Symposium, Seattle, p. 761; G. Mueller (editor), Electroluminescence II. V 65, Semiconductors and Semimetals, Academic Press, San Diego, 2000, p. 143-145. While these materials do achieve red, green and blue emission, the gallium-based sulphides sufferfrom low brightness, difficulty of preparation and stability problems.

It has recently been demonstrated that in the gallate based family of materials, ZnGa₂O₄:Mn could achieve bright and stable electroluminescence, see T. Minami, S. Takata, Y. Kuroi, T. Maeno, Digest 1995 SID International Symposium, Orlando, p. 724; and T. Minami, Y. Kuroi, S. Takata, Display Phosphors Conference, San Diego, Nov. 13-16, 1995, p. 91. They obtained good green emission (200 cd/m² at 60 Hz at up to 0.9 Im/W) but only obtained 0.5 cd/m² blue, and 11.0 cd/m² red at a drive frequency of 1000 Hz, which are not practical brightness values for a display by replacing Mn with Ce and Eu, respectively. They annealed these phosphor materials at 1020°C in argon.

More recently, Minami et al. have doped ZnGa₂O₄ with chromium to generate a better red phosphor, claiming 120 cd/m² at 1000 Hz, as disclosed in T. Minami, Y. Kuroi, S. Takata, T. Miyata, presented at Asia Display'95, Oct. 16-18, Hamamatsu. However it is not feasible to achieve full color in ZnGa₂O₄ since rare earths are not compatible with this host lattice due to the size mismatch between Zn or Ga and the rare earth ions.

Recently it has been demonstrated that Zn₂SiO₄:Mn could achieve electroluminescence, see T. Miyata, T. Minami, Y, Honda and S. Takata, SID '91 Digest, p. 286-289, 1991. Thin films were RF magnetron sputtered onto polished BaTiO₃ substrates using the method disclosed in T. Minami, T. Miyata, S. Takata, I. Fukuda, SID'92 Digest, p. 162. A good brightness of 200 cd/m² was achieved at 60 Hz with an efficiency of 0.8 Im/W. A drawback to these films is that they had to be annealed at 1000°C for several hours, which severely limits their applicability to practical substrates for displays.

In this group, new oxide phosphors based on doped gallium oxides, alkaline earth gallates and zinc germinates have been found exhibiting excellent electroluminescence. A series of alkaline earth gallates doped or co-doped with Eu and Tb exhibits red, bluishgreen and white electroluminescence with promising brightness and efficiency, see United States Patent Nos. 5,897,812, and 5,788,882, 1998; and A.H. Kitai, T. Xiao, G. Liu, H. Li, SID '97 Digest, 1997, p. 419-422; and T. Xiao, A.H. Kitai, SID '97 Digest, 1997, p. 310-313. Bright green emission has been obtained from Zn₂Si_{0.5}Ge_{0.5}O₄ doped with Mn. The maximum brightness and efficiency at 60 Hz drive are 377 cd/m² and 0.9 Im/W, respectively, United States Patent No. 5,897,812.

Recent study showed that the red EL phosphor Ga₂O₃:Eu has the maximum brightness and efficiency of 550 cd/m² and 0.38 Im/W, respectively, when driven at 60 Hz. It also exhibits long-term stability at brightness of 840 cd/m² over 2500 hours at 370 V and 650 Hz on a ceramic substrate, see D. Stodilka, A.H. Kitai, Z. Huang, K. Cook, SID'00 Digest, 2000, p. 11-13.

This phosphor was also incorporated in an EL device using a glass substrate, where a maximum brightness of 290 cd/m² at a drive voltage of 330 V at 60 Hz is achieved. The maximum efficiency is 0.38 lm/W, see A.H. Kitai, X. Deng, D.V. Stevanovic, Z. Jiang, S. Li, N. Peng, B.F. Collier, SID '02 Digest, 2002, p. 380-383.

A modified red phosphor was reported recently using MgGa₂O₄:Eu, which achieved a luminance of over 450 cd/m² at a drive voltage of 300 V at 120 Hz. Maximum efficiency is 0.924 Im/W, see Y. Yano, T. Oike, K. Nagano, 2002, Int'l. Conf. On Science and Technology of Emissive Displays and Lighting, Proceedings, Sept. 23-26, 2002, Ghent, Belgium, p. 225-230.

As mentioned above, a major drawback to known electroluminescent materials is the need for post fabrication high temperature annealing (in the vicinity of 1000°C) of the films to produce electroluminescent behavior. The need for high temperature treatment results in severe restrictions in the choice of substrates with only a limited number being available for use under these conditions. High temperature annealing also increases the difficulty of producing EL films rapidly on a large scale. Another limitation of many electroluminescent materials is that they are restricted to emitting at particular wavelengths or in a relatively narrow wavelength range, such as yellow ZnS:Mn or blue-green SrS:Ce which are not ideal for color displays that requires emission in the red, green and blue parts of the visible spectrum. Electroluminescent materials based on sulphides inherently suffer from chemical stability problems such as oxide formation (since oxides are generally thermodynamically more stable than sulphides) which changes the electronic properties of the material over time.

The classic EL phosphor, ZnS:Mn, is yellow and has a peak wavelength of 580 nm. However, while it may be filtered red and green, most of the light is lost because only 10% of the light is passed through the red and green filters. Similarly, a drawback of SrS:Ce, which is green-blue, is that only about 10% of the light is passed through a blue filter.

The red emitting Ga₂O₃:Eu phosphor requires a higher operating voltage compared to other EL phosphors. The drive voltage of 370 V mentioned in D. Stodilka, A.H. Kitai, Z. Huang and K. Cook, SID '00 Digest, 2000, p. 11-13 is substantially higher than desired. A voltage well below 300 V would be preferred. Due to its red emission and good efficiency, however, the Ga₂O₃:Eu is an attractive phosphor, which also possesses the advantage that annealing to temperatures of only 600°C is required.

It would therefore be very advantageous to provide new electroluminescent materials that exhibit lower voltage operation than Ga₂O₃:Eu but still provide red emission with good efficiency, and permit processing at 600°C or lower temperatures.

It would also be advantageous to provide a method of producing new EL materials that are chemically stable and do not react appreciably with water or oxygen. Known color phosphors such as SrS:Ce and other sulphides are not stable in these respects.

It is an object of this invention to provide electroluminescent materials which exhibit electroluminescent behaviour over the red portion of the electromagnetic spectrum useful in color electroluminescent including, for example, flat panel displays.

### DISCLOSURE OF INVENTION

The invention provides new phosphor materials exhibiting electroluminescence based on europium doped gallium-indium oxide materials.

In a preferred embodiment, the invention provides a mixed metal oxide having a formula Ga_{2-x-y}InₓEu_{y}O₃ wherein x spans the range 0.1 to 0.4 and y spans the range in which it is soluble in the phosphor.

In another aspect of the present invention, any of these electroluminescent phosphors may be used to provide an electroluminescent display device 20, having:
a) a dielectric layer 30 having a front surface, a back surface and a conducting electrode 32 on the back surface thereof;
b) an electroluminescent phosphor film 28 of any of the above-mentioned phosphor materials on said front surface; and
c) a substantially transparent electrode 24 formed adjacent to said electroluminescent phosphor 28.

### DESCRIPTION OF DRAWINGS

Preferred embodiments of the invention will now be described, by way of example only, with reference to the drawings, in which:
Fig. 1 is a schematic sectional view of the structure of an electroluminescent device using a glass substrate;
Fig. 2 is a typical plot of emitted light intensity versus wavelength showing the electroluminescent spectrum of Ga_{2-x-y}InₓEu_{y}O₃ family of phosphors
Fig. 3 are plots of brightness (left most vertical axis) and efficiency (right most vertical axis) versus voltage at 60 Hz of Ga_{1.83}Eu_{0.17}O₃ grown at 450°C, annealed at 600°C;
Fig. 4 are plots of brightness (left most vertical axis) and efficiency (right most vertical axis) versus voltage at 60 Hz of Ga_{1.83}Eu_{0.17}O₃ grown at 500°C, annealed at 600°C;
Fig. 5 are plots of brightness (left most vertical axis) and efficiency (right most vertical axis) versus voltage at 60 Hz of Ga_{1.73}In_{0.1}Eu_{0.17}O₃ grown at 450°C, annealed at 600°C;
Fig. 6 are plots of brightness (left most vertical axis) and efficiency (right most vertical axis) versus voltage at 60 Hz of Ga_{1.73}In_{0.1}Eu_{0.17}O₃ grown at 500°C, annealed at 600°C;
Fig. 7 are plots of brightness (left most vertical axis) and efficiency (right most vertical axis) versus voltage at 60 Hz of Ga_{1.73}In_{0.1}Eu_{0.17}O₃ grown at 540°C, annealed at 600°C;
Fig. 8 are plots of brightness (left most vertical axis) and efficiency (right most vertical axis) versus voltage at 60 Hz of Ga_{1.63}In_{0.2}Eu_{0.17}O₃ grown at 500°C, annealed at 600°C; and
Fig. 9 are plots of brightness (left most vertical axis) and efficiency (right most vertical axis) versus voltage at 60 Hz of Ga_{1.43}In_{0.4}Eu_{0.17}O₃ grown at 500°C, annealed at 600°C.

### BEST MODE FOR CARRYING OUT THE INVENTION

As used herein, the term phosphor(s) refers to mixed metal oxides which exhibit electroluminescence (EL) when a suitable electric field is applied across the material. The various metal elements used in the production of the new oxide based materials exhibiting EL disclosed herein include gallium (Ga), europium (Eu) and indium (In).

### EXPERIMENTAL TECHNIQUES

A number of experimental electroluminescent (EL) devices of the kind generally shown in Fig. 1 were constructed in accordance with the invention in which the first insulating dielectric layer 26 was omitted. For ease of reference, the layers of the EL devices constructed are identified by the reference numerals used in Fig. 1.

The phosphor layers 28 used to demonstrate the invention were prepared by mixing commercial powder high purity Ga₂O₃ (99.99921 %) (from Eagle Picher), Eu₂O₃ (99.99%) and In₂O₃ (99.995%) (from Alfa-Aesar), in the appropriate ratios, and then firing the mixtures at 1100°C in air for 6-10 hours. The phosphor powders were then ground and pressed into 2-inch targets. A 2-inch RF magnetron gun was used to sputter a thin film phosphor layer 28 onto substrates. Substrates 22 used in this invention were glass (Corning type 1737) of thickness 1.1 mm which had a first electrode 24 comprising a transparent indium-tin oxide coating of 0.3 micron onto which the thin film phosphor 28 was sputtered.

The indium-tin oxide coated substrate 22 was mounted onto a rotating holder located above the gun and heated to 450-540°C with a substrate heater, The sputtering process was carried out at a pressure of 20 mtorr, consisting of 30% to 45% O₂ in Ar. The thickness of the deposited films 28 was in the range of 2000 and 5000 Å. The films 28 were annealed in air at 600°C for 1 hour. A 2 micron thick strontium titanate dielectric layer 30 was deposited on top of the phosphor layer 28. Growth was carried out in three stages. The first 0.9 micron was sputtered by RF sputtering. The second 0.2 micron was grown by sol-gel. The final 0.9 micron was again sputtered by RF sputtering.

Finally, aluminum (Al) was evaporated as a top electrode 32 to a thickness of about 1000 Å.

EL emission spectra were taken using an Ocean Optics S-2000 spectrometer and the color coordinates were obtained using OOIColor Excel Template (Ocean Optics, Inc.). Brightness of the EL devices was measured with a Minolta Luminance Meter LS-100. Efficiency was obtained by the Sawyer-Tower method.

### RESULTS

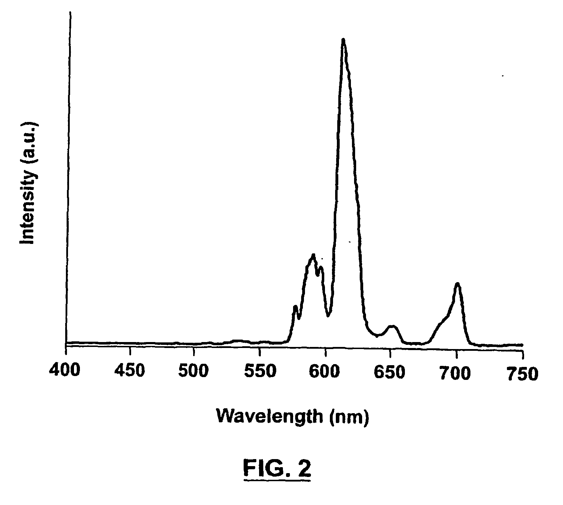

The phosphors 28 studied herein showed bright electroluminescence (EL) with red color. The spectrum shown in Fig. 2 is representative of all the EL results for the phosphor system Ga_{2-x-y}InₓEu_{y}O₃ and almost no dependence on the value of x was observed. The typical CIE colour coordinates of the red emission was measured as a = 0.64 and b = 0.36.

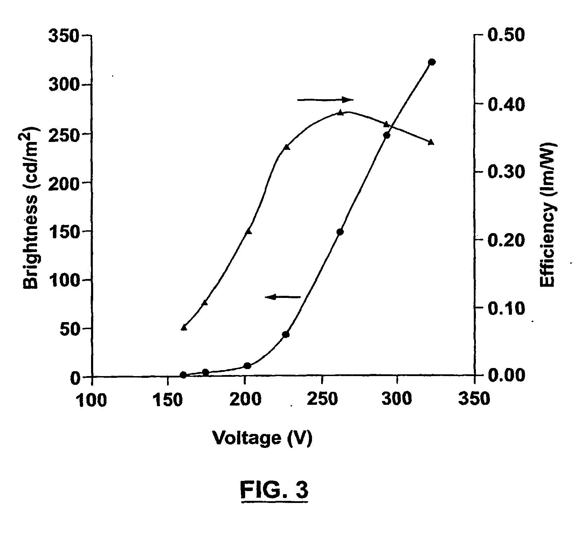

Fig. 3 shows the measured brightness and efficiency versus voltage of a reference device with phosphor composition of Ga_{1.83}Eu_{0.17}O₃. The growth temperature of the phosphor layer was 450°C and the anneal temperature was 600°C. Maximum efficiency was 0.38 Im/W at a drive voltage of 260 V. Phosphor thickness is about 0.27 µm.

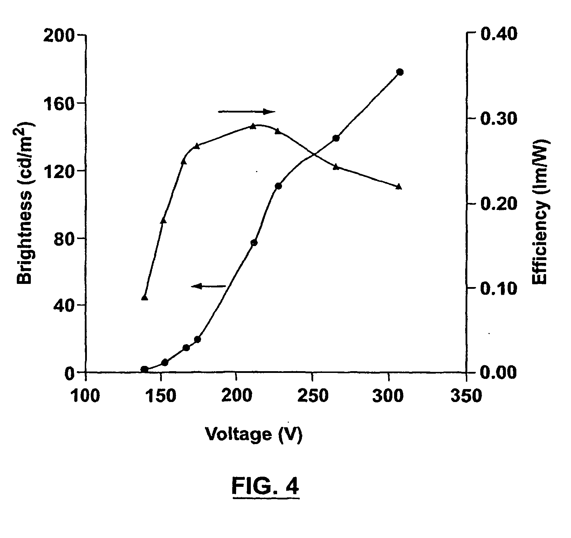

Fig. 4 shows that for another reference device with phosphor composition of Ga_{1.83}Eu_{0.17}O₃, a growth temperature of 500°C and an anneal temperature of 600°C, the maximum efficiency was 0.28 Im/W at a drive voltage of 210 V. Phosphor thickness is about 0.23 µm.

The rather high drive voltages required are illustrated by Figs. 3 and 4. In spite of a thinner phosphor layer used in Fig. 4, of only 0.23 µm, a drive voltage of 210 V is required for maximum efficiency.

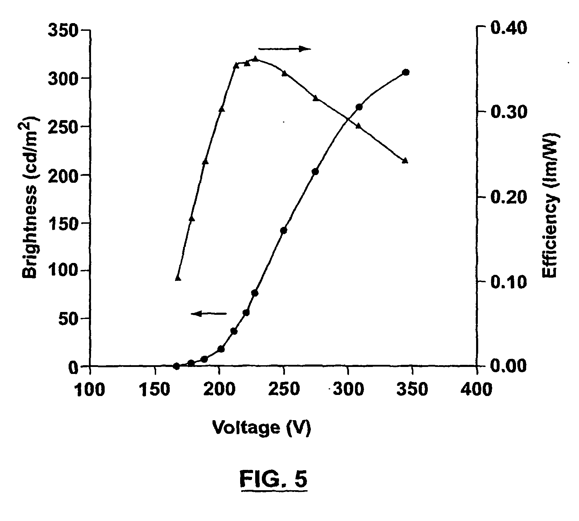

Fig. 5 shows that for a device with phosphor composition Ga_{1.73}In_{0.1}Eu_{0.17}O₃, a growth temperature of 450°C and an anneal temperature of 600°C, the maximum efficiency was 0.36 Im/W at a drive voltage of 230 V. Phosphor thickness is about 0.315 µm.

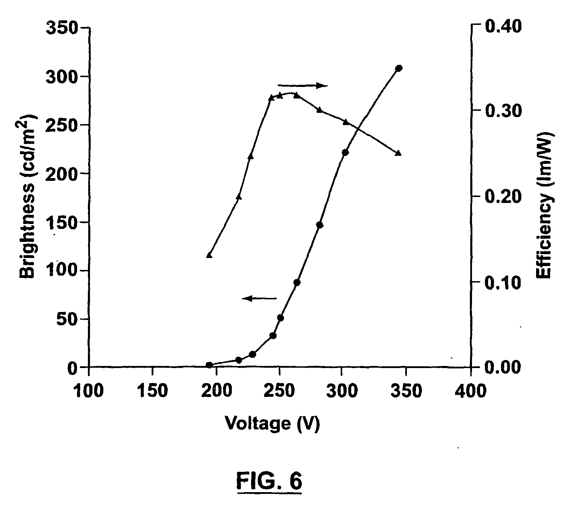

Fig. 6 shows that for a device with phosphor composition Ga_{1.73}In_{0.1}Eu_{0.17}O₃, a growth temperature of 500°C and an anneal temperature of 600°C, the maximum efficiency was 0.32 Im/W at a drive voltage of 250 V. Phosphor thickness was 0.42 µm.

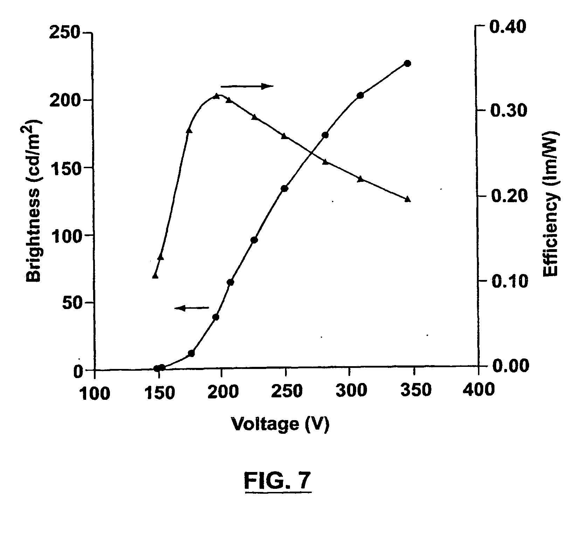

Fig. 7 shows that for a device with phosphor composition Ga_{1.73}In_{0.1}Eu_{0.17}O₃, a growth temperature of 540°C and an anneal temperature of 600°C, the maximum efficiency was 0.32 Im/W at a drive voltage of 195 V. The phosphor thickness was about 0.255 µm.

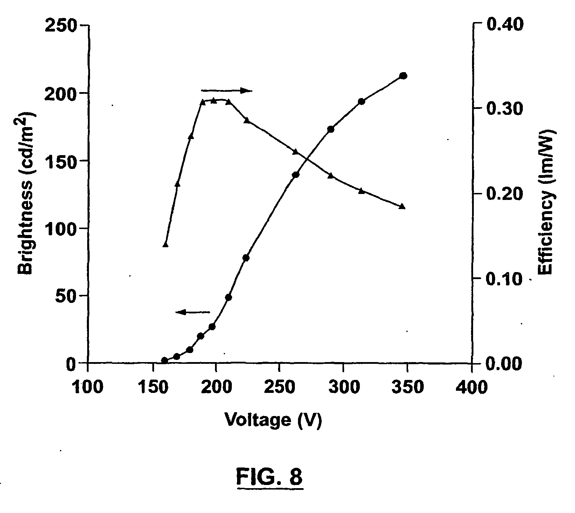

Fig. 8 shows that for a device with phosphor composition Ga_{1.63}In_{0.2}Eu_{0.17}O₃, a growth temperature of 500°C and an anneal temperature of 600°C, the maximum efficiency was 0.31 Im/W at a drive voltage of 200 V. The phosphor thickness was 0.37 µm.

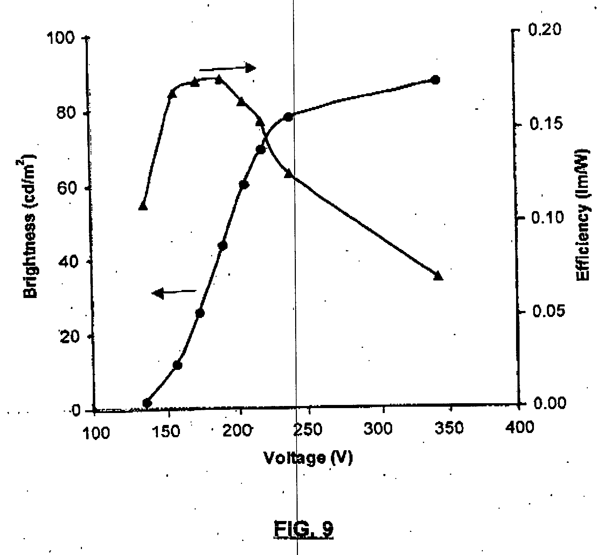

Finally, Fig.9 shows that for a device with phosphor composition Ga_{1.43}In_{0.4}Eu_{0.17}O₃, a growth temperature of 500°C and an anneal temperature of 600°C, the maximum efficiency was 0.175 Im/W at a drive voltage of 180 V. The phosphor thickness was about 0.32 µm.

It is clear from examination of Figs. 3, 4, 5, 6, 7, 8 and 9, that a trend toward lower operating voltages is present. Since the operating voltage also depends on phosphor layer thickness, however, the trend is not as clear as if all the devices were grown using the same phosphor thickness. This was not feasible due to the limitations of our experimental technique, which provides only approximate thickness control.

The difficulty may be overcome by calculating the threshold electric field in the phosphor layer necessary to achieve luminescence in each device. The calculation of electric field compensates for the phosphor layer thickness. For Figs. 3 and 4, the threshold electric field is about 4.27×10⁸ V/m. For Figs. 5, 6 and 7, the threshold electric field is about 3.97×10⁸ V/m. For Fig. 8, the threshold electric field is 3.4x10⁸ V/m. For Fig. 9, the threshold electric field is 3.26x10⁸ V/m.

Now the trend is clearer. Results from more samples grown under similar conditions confirm the decrease in electric field, showing a ~25% decrease in electric field on samples of composition Ga_{1.43}In_{0.4}Eu_{0.17}O₃ compared with samples of composition Ga_{1.83}Eu_{0.17}O₃.

### INDUSTRIAL APPLICABILITY

Benefits of a lower electric field include lower drive voltages and lower electrical stress on the insulating layer in the EL device. It is well known to those familiar with EL devices that the insulating layer is subjected to electric fields that depend on the electric field applied to the phosphor. If the electric field in the insulator layer is reduced, better drive reliability is obtained.

In addition, the EL device exhibits electrical capacitance. If the electric field necessary for EL operation is decreased in the phosphor layer, then phosphor layer thickness may be increased, and the capacitance of the EL device will decrease. It is generally desirable to have as small a device capacitance as possible, which reduces the electric current and power dissipation in EL display devices.

It will be appreciated that while the fabrication of the new electroluminescent phosphors disclosed herein has been described using sputtering as the film preparation method, other methods known to those skilled in the art may be used. Other methods of fabrication include electron beam deposition, laser ablation, chemical vapor deposition, vacuum evaporation, molecular beam epitaxy, sol gel deposition and plasma enhanced vacuum evaporation to mention a few.

Various thin film dielectrics 26, 30 used in electroluminescent applications include SiO₂, SiON, Al₂O₃, BaTiO₃, BaTa₂O₆, SrTiO₃, PbTiO₃, PbNb₂O₆, Sm₂O₃, Ta₂O₅-TiO₂, Y₂O₃, Si₃N₄, SiAlON. Dielectrics which may be used as an insulator in the present invention may be selected from the above list and deposited onto glass, silicon or quartz substrates 22, to mention just a few.

While the results disclosed herein were obtained using thin film dielectrics 26, 30 thick films on ceramic or glass substrates 22 may also be used. The ceramic substrate 22 may be alumina (Al₂O₃) or made from the same ceramic as the thick film itself. Thick dielectric films of BaTiO₃, SrTiO₃, PbZrO₃, PbTiO₃, to mention just a few, may be used.

Variations of the EL laminate device 20 configuration will be readily apparent to those skilled in the art. Such variations will in part be dependent on the intended commercial use of the EL device. Where the EL device is a flat panel display, the substrate 22 is made of glass and the associated electrode layer 24 must be transparent or nearly so. By making the electrode layer 24 very thin, near transparently is achieved using materials such as the indium-tin oxide ITO of the above-described examples. An alternative material for use as a transparent electrode material would be a thin layer of Zn0:Al (aluminum doped zinc oxide). Alternatively, an alumina substrate 22 may be used onto which the lower conductive electrode 24 is deposited followed by a high dielectric constant material 26, a phosphor 28 and then an outer transparent electrode 32. Alternatively, a conductive electrode contact 24 may be deposited onto a glass or quartz substrate 22 followed by a dielectric layer 26, a phosphor 28, another dielectric layer 30 and a second electrode 32.

The EL characteristics of the phosphors may vary within the solubility range of the dopant(s) in the host lattice. Electronic interactions between dopant ions can play a role in determining the preferred concentration of dopant ions for maximum brightness and efficiency. This phenomenon, known as concentration quenching, results in decreasing brightness and efficiency for doping concentrations beyond a certain point within the solubility limit such that there will be preferred dopant concentrations which give optimum EL properties. The dopant content may therefore vary within its solubility range in the host lattice.

It is to be understood that the nomenclature or notation used herein to identify the new phosphor materials is not to be interpreted as limiting. For example, it is not necessarily the case that the Eu rare earth dopant substitutes for Ga in the host lattice of the gallates or for Ga and In in the gallium-indium oxides. It will also be appreciated by those skilled in the art that the allowable ranges of concentration of dopants in the different new phosphor materials disclosed herein will depend in part on the solubility limit of the dopant in the oxides.

It is also to be understood that deviations in the cation concentrations in the phosphors may occur due to the sputtering process. These deviations in stoichiometry may have influence on the resulting EL behaviour; however, the validity of results presented herein is not compromised by such deviations.

The foregoing description of the preferred embodiments of the invention has been presented to illustrate the principles of the invention and not to limit the invention to the particular embodiment illustrated. It is intended that the scope of the invention be defined by all of the embodiments that would be obvious to those skilled in the art.

### LIST OF REFERENCE NUMERALS

- 20: EL device
- 22: glass substrate
- 24: 1^{st} electrode
- 26: dielectric layer
- 28: phosphor layer
- 30: 2^{nd} dielectric layer
- 32: 2^{nd} electrode

## Claims

1. An electroluminescent red emitting phosphor compound having a formulation Ga_{2-x-y}InₓEu_{y}O₃ where x is in the range from about 0.01 to about 0.4 and y is greater than zero and spans the range in which it is soluble in Ga_{2-x-y}InₓEu_{y}O₃.

2. A red emitting phosphor compound according to claim 1 wherein y is in the range from about 0.05 to about 0.3.

3. A red emitting phosphor compound according to claim 1 wherein y is 0.17.

4. A red emitting phosphor compound according to claim 1 wherein said phosphor is sputtered from a source selected from the group consisting of Ga₂O₃, Eu₂O₃, and In₂O₃.

5. An electroluminescent display device 20 having:
a) a dielectric layer (30) having a front surface, a back surface and a conducting electrode (32) on the back surface thereof;
b) an electroluminescent red emitting phosphor film (28) having a formulation Ga_{2-x-y}InₓEu_{y}O₃, where x is in the range 0.01 to 0.4, y is greater than zero and spans the range in which it is soluble in Ga_{2-x-y}InₓEu_{y}O₃, said phosphor film being disposed on the front surface of said dielectric layer (30); and
c) a substantially transparent electrode (24) disposed on an outer surface of said phosphor film.

6. An electroluminescent display device (20) according to claim 5 wherein said formulation of said phosphor film comprises y in the range from about 0.05 to about 0.3.

7. An electroluminescent display device (20) according to claim 5 wherein said formulation of said phosphor film comprises y equal to 0.17.

8. An electroluminescent display device (20) according to claim 5 wherein said phosphor film (28) is deposited from a source material by sputtering.

9. An electroluminescent display device (20) according to claim 8 wherein said source material has a formulation selected from the group consisting of Ga₂O₃, Eu₂O₃, and In₂O₃.

10. An electroluminescent display device (20) according to claim 8 wherein said phosphor film (28) is sputtered at a substrate heated to a temperature of 450°-540°C.

11. An electroluminescent display device according to claim 8 wherein said phosphor film (28) is annealed at about 600°C or less for about 1 hour in air.

12. An electroluminescent display device (20) having
a phosphor layer (28) made from the compound Ga_{2-x-y}InₓEu_{y}O₃ in which x is in the range from 0.01 to 0.4 and y is greater than zero and spans the range in which it is soluble in Ga_{2-x-y}InₓEu_{y}O₃,
at least one dielectric insulating layer (30, 26) disposed adjacent said phosphor layer (28) and
first and second electrodes (24, 32) disposed on opposite sides of said phosphor layer (28) with said at least one dielectric insulating layer (30, 26) disposed therebetween, at least one said electrode (24) being substantially transparent.

13. An electroluminescent display device (20) according to claim 12 in which one said first and second electrodes (24) is formed on a substantially transparent substrate (22).

14. An electroluminescent display device (20) according to claim 12 having two dielectric insulating layers (26, 30) formed on opposite sides of said phosphor layer (28).

15. An electroluminescent display device (20) according to claim 12 having means for applying a voltage between said first and second electrodes (24, 32).

16. An electroluminescent display device (20) according to claim 12 in which at least one said first and second electrodes (24, 30) is made from material selected from the group comprising indium-tin oxide and aluminum doped zinc oxide.

17. An electroluminescent display device (20) according to claim 12 in which said at least one dielectric insulating layer (26, 30) is substantially transparent.

18. An electroluminescent display device (20) according to claim 12 in which said at least one dielectric insulating layer (26, 30) is strontium titanate.

19. An electroluminescent display device (20) according to claim 12 in which said at least one dielectric insulating layer (26, 30) is selected from the group comprising SiO₂, SiON, Al₂O₃, BaTiO₃, BaTa₂O₆, SrTiO₃, PbTiO₃, PbNb₂O₆, Sm₂O₃, Ta₂O₅-TiO₂, Y₂O₃, Si₃N₄, SiAlON.

20. An electroluminescent display device (20) according to claim 13 in which said substantially transparent substrate (22) is selected from the group comprising: glass, silicon and quartz.

21. An electroluminescent display device (20) according to claim 12 in which said at least one dielectric insulating layer (26, 30) is selected from the group comprising BaTiO₃, SrTiO₃, PbZrO₃, PbTiO₃.

22. An electroluminescent display device (20) according to claim 12 in which one said first and second electrodes (24, 32) is formed on a substrate (22).

23. An electroluminescent display device according to claim 22 in which said substrate (22) is selected from the groups comprising: Al₂O₃, BaTiO₃, SrTiO₃, PbZrO₃, PbTiO₃.

24. A method of producing electroluminescence comprising providing an electroluminscent phosphor (28) made from the compound Ga_{2-x-y}InₓEu_{y}O₃ in which x is in the range from 0.01 to 0.4 and y is greater than zero and spans the range in which it is soluble in Ga_{2-x-y}InₓEu_{y}O₃ and applying an effective voltage across said electroluminescent phosphor to develop an electric field.

25. A method of producing electroluminescence according to Claim 24 in which y is in the range from 0.05 to 0.3.

26. A method of producing electroluminescence according to Claim 24 in which y is equal to 0.17.

## Patentansprüche

1. Im roten Bereich emittierende Elektrolumineszenz - Leuchtmassenverbindung, welche der Formel Ga_{2-x-y}InₓEuyO₃ entspricht, in welcher x in dem Bereich von etwa 0,01 bis etwa 0,4 liegt, y größer als Null ist und einen Bereich überspannt in welchem sie in Ga_{2-x-y}InₓEuyO₃ löslich ist.

2. Im roten Bereich emittierende Leuchtmassenverbindung gemäß Anspruch 1, in welcher y in dem Bereich von etwa 0,05 bis etwa 0,3 liegt.

3. Im roten Bereich emittierende Leuchtmassenverbindung gemäß Anspruch 1, in welcher y sich auf 0,17 beläuft.

4. Im roten Bereich emittierende Leuchtmassenverbindung gemäß Anspruch 1, in welcher die Leuchtmasse ausgehend von einer Quelle zerstäubt wird, welche ausgewählt wird aus der Gruppe bestehend aus Ga₂O₃, Eu₂O₃ und In₂O₃.

5. Elektrolumineszenz - Bildschirmgerät 20, welches aufweist;
a) eine dielektrische Lage (30) mit einer vorderen Oberfläche, einer hinteren Oberfläche und einer leitenden Elektrode (32) auf der hinteren Oberfläche derselben,
b) einen im roten Bereich emittierenden Elektrolumineszenz - Leuchtmassenfilm (28) mit einer Formel Ga_{2-x-y}InₓEu_{y}O₃, in welcher x in dem Bereich von 0,01 bis 0,4 liegt, y größer als Null ist und einen Bereich überspannt in welchem sie in Ga_{2-x-y}InₓEuyO₃ löslich ist, wobei der besagte Leuchtmassenfilm an der vorderen Oberfläche der besagten dielektrischen Lage (30) angeordnet ist; und
c) eine im Wesentlichen transparente Elektrode (24), die an der äußeren Oberfläche des Leuchtmassenfilms angeordnet ist.

6. Elektrolumineszenz - Bildschirmgerät 20 gemäß Anspruch 5, bei welchem die Formel des Leuchtmassenfilms ein y in dem Bereich von etwa 0,05 bis etwa 0,3 aufweist.

7. Elektrolumineszenz - Bildschirmgerät 20 gemäß Anspruch 5, bei welchem die Formel des Leuchtmassenfilms ein y aufweist, welches gleich 0,17 ist.

8. Elektrolumineszenz - Bildschirmgerät 20 gemäß Anspruch 5, bei welchem der Leuchtmassenfilm (28) ausgehend von dem Quellenmaterial durch Zerstäubung abgeschieden wird.

9. Elektrolumineszenz - Bildschirmgerät 20 gemäß Anspruch 8, bei welchem das Quellenmaterial eine Formel aufweist, welche ausgewählt wird aus der Gruppe bestehende aus Ga₂O₃, Eu₂O₃ und In₂O₃.

10. Elektrolumineszenz - Bildschirmgerät 20 gemäß Anspruch 8, bei welchem der Leuchtmassenfilm (28) bei einem Substrat zerstäubt wird, welches auf eine Temperatur von 450° - 540°C erhitzt ist.

11. Elektrolumineszenz - Bildschirmgerät 20 gemäß Anspruch 8, bei welchem der Leuchtmassenfilm (28) bei etwa 600°C oder weniger während etwa einer Stunde an der Luft geglüht wird.

12. Elektrolumineszenz - Bildschirmgerät 20, welches aufweist;
eine Leuchtmassenlage (28), die hergestellt ist aus der Verbindung Ga_{2-x-y}InₓEuyO₃, in welcher x in dem Bereich von 0,01 bis 0,4 liegt, y größer als Null ist und einen Bereich überspannt in welchem sie in Ga_{2-x-y}InₓEuyO₃ löslich ist,
mindestens eine dielektrische Isolierungslage (30, 26), die angrenzend an die Leuchtmassenlage (28) angeordnet ist; und
eine erste und eine zweite Elektrode (24, 32), die auf den einander gegenüber liegenden Seiten der Leuchtmassenlage (28) angeordnet sind, wobei die mindestens eine dielektrische Isolierungslage (30, 26) dazwischen angeordnet ist, und wobei die mindestens eine Elektrode (24) im Wesentlichen transparent ist.

13. Elektrolumineszenz - Bildschirmgerät 20 gemäß Anspruch 12, bei welchem eine von der ersten und der zweiten Elektrode (24) auf einem im Wesentlichen transparenten Substrat (22) ausgebildet wird.

14. Elektrolumineszenz - Bildschirmgerät 20 gemäß Anspruch 12, welche mindestens zwei dielektrische Isolierungslagen (30, 26) aufweist, welche auf den einander gegenüber liegenden Seiten der Leuchtmassenlage (28) ausgebildet werden.

15. Elektrolumineszenz - Bildschirmgerät 20 gemäß Anspruch 12, welches Hilfsmittel aufweist über welche eine Spannung zwischen der ersten und der zweiten Elektrode (24, 32) angelegt werden kann.

16. Elektrolumineszenz - Bildschirmgerät 20 gemäß Anspruch 12, bei welchem mindestens eine von der ersten und der zweiten Elektrode (24, 32) aus einem Material gefertigt ist, welches ausgewählt wird aus der Gruppe bestehend aus Indiumzinnoxid und aus mit Aluminium dotiertem Zinnoxid.

17. Elektrolumineszenz - Bildschirmgerät 20 gemäß Anspruch 12, bei welchem die mindestens eine dielektrische Isolierungslage (30, 26) im Wesentlichen transparent ist.

18. Elektrolumineszenz - Bildschirmgerät 20 gemäß Anspruch 12, bei welchem die mindestens eine dielektrische Isolierungslage (30, 26) aus Strontiumtitanat besteht.

19. Elektrolumineszenz - Bildschirmgerät 20 gemäß Anspruch 12, bei welchem die mindestens eine dielektrische Isolierungslage (30, 26) ausgewählt wird aus der Gruppe bestehend aus SiO₂, SiON, Al₂O₃, BaTiO₃, BaTa₂O₆, SrTiO₃, PbTiO₃, PbNb₂O₆, Sm₂O₃, Ta₂O₅ - TiO₂, Y₂O₃, Si₃N₄, SiAlON .

20. Elektrolumineszenz - Bildschirmgerät 20 gemäß Anspruch 13, bei welchem das im Wesentlichen transparente Substrat (22) ausgewählt wird aus der Gruppe bestehend aus Glas, Silziumdioxid und Quartz.

21. Elektrolumineszenz - Bildschirmgerät 20 gemäß Anspruch 12, bei welchem die mindestens eine dielektrische Isolierungslage (30, 26) ausgewählt wird aus der Gruppe bestehend aus BaTiO₃, SrTiO₃, PbZrO₃, PbTiO₃.

22. Elektrolumineszenz - Bildschirmgerät 20 gemäß Anspruch 12, bei welchem die erste und die zweite Elektrode (24, 32) auf einem Substrat (22) ausgebildet werden.

23. Elektrolumineszenz - Bildschirmgerät gemäß Anspruch 22, bei welchem das Substrat (22) ausgewählt wird aus der Gruppe bestehend aus Al₂O₃, BaTiO₃, SrTiO₃, PbZrO₃, PbTiO₃.

24. Verfahren zur Erzeugung von Elektrolumineszenz, welches vorsieht; ein Bereitstellen einer Elektrolumineszenz - Leuchtmasse (28), welche hergestellt ist aus der Verbindung Ga_{2-x-y}InₓEuyO₃, in welcher x in dem Bereich von 0,01 bis 0,4 liegt, y größer als Null ist und einen Bereich überspannt in welchem sie in Ga_{2-x-y}InₓEuyO₃ löslich ist, ein Anlegen einer wirksamen Spannung durch die Elektrolumineszenz - Leuchtmasse (28) hindurch, um ein elektrisches Feld zu entwickeln.

25. Verfahren zur Erzeugung von Elektrolumineszenz gemäß Anspruch 24, bei welchem y in dem Bereich von 0,05 bis 0,3 liegt.

26. Verfahren zur Erzeugung von Elektrolumineszenz gemäß Anspruch 24, bei welchem y gleich 0,17 ist.

## Revendications

1. Composé phosphorescent émetteur de rouge électroluminescent possédant une formulation Ga_{2-x-y}InₓEu_{y}O₃ où x est dans l'intervalle d'environ 0,01 à environ 0,4 et y est supérieur à zéro et couvre l'intervalle dans lequel il est soluble dans Ga_{2-x-y}InₓEu_{y}O₃.

2. Composé phosphorescent émetteur de rouge suivant la revendication 1, dans lequel y est dans l'intervalle d'environ 0,05 à environ 0,3.

3. Composé phosphorescent émetteur de rouge suivant la revendication 1, dans lequel y est 0,17.

4. Composé phosphorescent émetteur de rouge suivant la revendication 1, dans lequel ladite substance phosphorescente est pulvérisée cathodiquement à partir d'une source choisie dans le groupe constitué de Ga₂O₃, Eu₂O₃ et In₂O₃.

5. Dispositif d'affichage électroluminescent 20 possédant:
a) une couche diélectrique (30) avec une surface avant, une surface arrière et une électrode conductrice (32) sur la surface arrière de celle-ci;
b) un film phosphorescent émetteur de rouge électroluminescent (28) possédant une formulation Ga_{2-x-y}InₓEu_{y}O₃ où x est dans l'intervalle de 0,01 à 0,4 et y est supérieur à zéro et couvre l'intervalle dans lequel il est soluble dans Ga_{2-x-y}InₓEu_{y}O₃, ledit film phosphorescent étant disposé sur la surface avant de ladite couche diélectrique (30); et
c) une électrode substantiellement transparente (24) disposée sur une surface externe dudit film phosphorescent.

6. Dispositif d'affichage électroluminescent (20) suivant la revendication 5, dans lequel ladite formulation dudit film phosphorescent comprend y dans l'intervalle d'environ 0,05 à environ 0,3.

7. Dispositif d'affichage électroluminescent (20) suivant la revendication 5, dans lequel ladite formulation dudit film phosphorescent comprend y égal à 0,17.

8. Dispositif d'affichage électroluminescent (20) suivant la revendication 5, dans lequel ledit film phosphorescent (28) est déposé à partir d'un matériau source par une pulvérisation cathodique.

9. Dispositif d'affichage électroluminescent (20) suivant la revendication 8, dans lequel ledit matériau source possède une formulation choisie dans le groupe constitué de Ga₂O₃, Eu₂O₃ et In₂O₃.

10. Dispositif d'affichage électroluminescent (20) suivant la revendication 8, dans lequel ledit film phosphorescent (28) est pulvérisé cathodiquement au niveau d'un substrat chauffé à une température de 450°-540°C.

11. Dispositif d'affichage électroluminescent suivant la revendication 8, dans lequel ledit film phosphorescent (28) est recuit à environ 600°C ou moins pendant environ 1 heure à l'air.

12. Dispositif d'affichage électroluminescent (20) possédant:
une couche phosphorescente (28) fabriquée à partir du composé Ga_{2-x-y}InₓEu_{y}O₃ où x est dans l'intervalle de 0,01 à 0,4 et y est supérieur à zéro et couvre l'intervalle dans lequel il est soluble dans Ga_{2-x-y}InₓEu_{y}O₃;
au moins une couche isolante diélectrique (30, 26) disposée adjacente à ladite couche phosphorescente (28); et
une première et une deuxième électrodes (24, 32) disposées sur les côtés opposés de ladite couche phosphorescente (28) avec ladite au moins une couche isolante diélectrique (30, 26) disposée entre celles-ci, au moins une desdites électrodes (24) étant substantiellement transparente.

13. Dispositif d'affichage électroluminescent (20) suivant la revendication 12, dans lequel l'une de ladite première et de ladite deuxième des électrodes (24) est formée sur un substrat (22) substantiellement transparent.

14. Dispositif d'affichage électroluminescent (20) suivant la revendication 12, qui est pourvu de deux couches d'isolation diélectriques (26, 30) formées sur des côtés opposés de ladite couche phosphorescente (28).

15. Dispositif d'affichage électroluminescent (20) suivant la revendication 12, qui est pourvu de moyens pour appliquer une tension entre ladite première et ladite deuxième des électrodes (24, 32).

16. Dispositif d'affichage électroluminescent (20) suivant la revendication 12, dans lequel au moins l'une de ladite première et de ladite deuxième des électrodes (24, 32) est fabriquée à partir d'un matériau choisi dans le groupe constitué d'oxyde d'indium-étain et d'aluminium doté d'oxyde de zinc.

17. Dispositif d'affichage électroluminescent (20) suivant la revendication 12, dans lequel ladite au moins une couche d'isolation diélectrique (26, 30) est substantiellement transparente.

18. Dispositif d'affichage électroluminescent (20) suivant la revendication 12, dans lequel ladite au moins une couche d'isolation diélectrique (26, 30) est constituée de titanate de strontium.

19. Dispositif d'affichage électroluminescent (20) suivant la revendication 12, dans lequel ladite au moins une couche d'isolation diélectrique (26, 30) est sélectionnée dans le groupe constitué de SiO₂, SiON, Al₂O₃, BaTiO₃, BaTa₂O₆, SrTiO₃, PbTiO₃, PbNb₂O₆, Sm₂O₃, Ta₂O₅ - TiO₂, Y₂O₃, Si₃N₄, SiAlON.

20. Dispositif d'affichage électroluminescent (20) suivant la revendication 13, dans lequel ledit substrat substantiellement transparent est sélectionné dans le groupe constitué de verre, silice et quartz.

21. Dispositif d'affichage électroluminescent (20) suivant la revendication 12, dans lequel ladite au moins une couche d'isolation diélectrique (26, 30) est sélectionnée dans le groupe constitué de BaTiO₃, SrTiO₃, PbZrO₃, PbTiO₃.

22. Dispositif d'affichage électroluminescent (20) suivant la revendication 12, dans lequel l'une de ladite première et de ladite deuxième des électrodes (24) est formée sur un substrat (22).

23. Dispositif d'affichage électroluminescent suivant la revendication 22, dans lequel ledit substrat (22) est sélectionné dans le groupe constitué de Al₂O₃, BaTiO₃, SrTiO₃, PbZrO₃, PbTiO₃.

24. Procédé pour produire de l'électroluminescence comportant les étapes de prévoir un composé phosphorescent électroluminescent (28) produit à partir du composé Ga_{2-x-y}InₓEu_{y}O₃ où x est dans l'intervalle d'environ 0,01 à environ 0,4 et y est supérieur à zéro et couvre l'intervalle dans lequel il est soluble dans Ga_{2-x-y}InₓEu_{y}O₃ et d'appliquer une tension efficace à travers ledit composé phosphorescent afin de développer un champ électrique.

25. Procédé pour produire de l'électroluminescence suivant la revendication 24, dans lequel y est dans l'intervalle d'environ 0,05 à environ 0,3.

26. Procédé pour produire de l'électroluminescence suivant la revendication 24, dans lequel y est 0,17.
